# EUROPEAN PATENT SPECIFICATION

(11) **EP 3 508 528 B1**
(45) Date of publication and mention of the grant of the patent: **23.08.2023**
(21) Application number: 17846004.4
(22) Date of filing: 31.07.2017
(51) Int. Cl.: C08L 23/26, B32B 27/28, B32B 27/32, C08L 23/08, C09J 123/08, C09J 123/26, H01B 7/08, C09D 151/06, C09J 151/06, B32B 27/36

(54) **A LAMINATE HAVING A BASE MATERIAL AND AN ADHESIVE LAYER**
EIN LAMINAT MIT EINEM BASISMATERIAL UND EINER KLEBSTOFFSCHICHT
STRATIFIÉ AYANT UN MATÉRIAU DE BASE ET UNE COUCHE ADHÉSIVE

(30) Priority: 01.09.2016 JP 2016170931
(43) Date of publication of application: 10.07.2019
(60) Divisional application: 21187257.7
(73) Proprietor: Riken Technos Corporation, Tokyo 101-8336 (JP)
(72) Inventor: ZENNYOJI Yoshihiro, Tokyo 101-8336 (JP); INOMATA Sayuri, Tokyo 101-8336 (JP)
(74) Representative: Müller-Boré & Partner Patentanwälte PartG mbB
(86) International application number: PCT/JP2017/027690
(87) International publication number: WO 2018/042995

(56) References cited:
- EP-A1- 0 791 628
- EP-A1- 2 883 925
- WO-A1-2014/010500
- WO-A1-2016/181880
- JP-A- H09 201 913
- JP-A- 2002 184 251
- JP-A- 2002 313 151
- JP-A- 2006 124 510
- JP-A- 2009 272 083
- JP-A- 2012 164 607

## Description

The present invention relates to a laminate. The present invention relates more particularly to a laminate having a resin film base material and an adhesive layer, wherein the adhesive layer uses a resin composition that has excellent adhesiveness to bare copper. The laminate can be used as a covering material for a flexible flat cable.

Flexible flat cables have a covered structure in which a plurality of conductors are arrayed and sandwiched between laminates that have an insulating base film and an adhesive resin composition layer. As the above-mentioned adhesive resin composition, a polyester-based resin composition is generally used in many cases.

Flexible flat cables are conventionally used for wiring in electronic equipment such as computers, image display devices, mobile phones, printers, car navigation systems, and copiers. In recent years, flexible flat cables have also come to be used for applications associated with hot and humid environments, including: electronic equipment installed on the exterior of an automobile, such as millimeter-wave radars and vehicle-mounted cameras; home electric appliances that generate steam, such as rice cookers, electric jar pots, and microwave ovens.

However, a polyester-based resin composition used as an adhesiveness resin composition has insufficient resistance to heat and humidity and has been found to have a problem in that such a composition will cause the laminate to peel off the conductor when used in a hot and humid environment and will expose the conductor in some extreme cases.

In this regard, Patent Document 1 proposes "a covering material for flat cables, comprising a film-like base material, an anchor coat layer, and a heat seal layer that are layered in this order; wherein the heat seal layer comprises a filler component and a resin component; wherein the filler component comprises a flame retardant as a main component; wherein the resin component comprises a polyester-based resin as a main component and an additive for suppressing the hydrolysis of the polyester-based resin; and wherein the content of the additive is 0.5 to 10 mass% with respect to the total amount of the filler component and the resin component", and discloses the results of the conductor adhesive strength and bending storage tested after the cable was stored at a temperature of 85°C and a humidity of 85% RH for 500 hours. However, the conductor adhesive strength subsequent to the storage was not satisfactory, and a further enhancement is demanded.

In addition, compliance to standards for high rated temperatures or accreditation to the standards conventionally involves a cross-linking step such as electron beam irradiation cross-linking or water cross-linking. In recent years, however, productivity and cost considerations require that compliance to standards for high rated temperatures or accreditation to the standards be achieved without involving any cross-linking step.

### Patent Documents

Patent Document 1: Japanese Unexamined Patent Publication No. 2013-254703
Patent Document 2: Japanese Unexamined Patent Publication No. 2015-201312

Further, Patent Document 3 (EP 2 883 925 A1) describes a composition which comprises a polypropylene grafted based resin as main component, a polypropylene homo- or copolymer, an ethylene copolymer based component and a nucleator which acts as promoter of the adhesion of the composition.

Patent Document 4 (JP 2012 164607 A) describes a non-halogen flame-retardant cable having heat resistance, flame retardancy, low smoke emission, and allegedly excellent processability.

Patent Document 5 (EP 0 791 628 A1) describes an adhesive composition comprising a specific grafted long-chain branched ethylene-α-olefin copolymer and either a tackifier or a specific ethylene-vinyl acetate copolymer.

Patent Document 6 (JP H09 201913 A) describes a laminated body to cover a metal cable under the state that neither delamination occurs nor blowing develops under an elevated temperature in a flat cable.

Patent Document 7 (JP 2006 124510 A) describes resin composition for insulating an electric wire, consisting of (a) flexible polypropylene and/or (b) ethylene-vinyl acetate copolymer, (c) modified polyethylene and (d) modified polypropylene with inorganic hydrate.

Patent Document 8 (JP 2009 272083 A) describes an insulating film covering both sides of a conductor, and a flat cable provided with the insulating film.

An object of the present invention is to provide a resin composition that has excellent adhesiveness to bare copper, is capable of retaining adhesiveness to bare copper even when exposed to a hot and humid environment for a long period of time, and enables compliance to standards for high rated temperatures or accreditation to the standards to be achieved without involving a cross-linking step, and to provide a laminate that can be suitably used as a covering material for flexible flat cables, for which material the resin composition is used.

The present inventors have diligently studied and consequently found out that the above-mentioned object can be achieved with a laminate having a specific resin composition as defined in claim 1.

In other words, the first invention is a laminate having a resin film base material and an adhesive layer placed on one side of the resin film base material,
in which the adhesive layer contains a resin composition containing: (A) an acid modified polypropylene-based resin; (B) a copolymer of ethylene and one or more comonomers selected from the group consisting of vinyl acetate, an alkyl methacrylate, and an alkyl acrylate; and (C) a flame retardant; in which the adhesive layer has a melt mass flow rate of 1 to 60 g/10 minutes as measured in accordance with JIS K 7210:1999 under the conditions of 190°C and 21.18 N;
in which the laminate satisfies the following (1) and (2):
   (1) an adhesive strength between a test piece and a copper wire in a sample is 0.7 N/mm or more as measured in a 180-degree peeling test under the condition of a 100 mm/minute test rate, in which the test piece, 50 mm in width and 150 mm in length, is cut out of the laminate such that the machine running direction of the laminate is the longitudinal direction of the test piece; a bare copper wire (annealed copper wire ), 0.7 mm in conductor width and 0.035 mm in thickness, is placed on the adhesive layer of the test piece such that the longitudinal direction of the copper wire agrees with the longitudinal direction of the test piece; a pressing machine is used to sandwich the test piece with the copper wire placed thereon between a metal plate and a silicone rubber sheet each preheated to a temperature of 190°C, such that the copper wire side faces the silicone rubber sheet side; the resulting piece is pressed under the conditions of a 0.3 MPa pressure and a 8-second time to produce the sample; and the sample is treated for 1000 hours in a thermohygrostat set to a temperature of 85°C and a relative humidity of 85%;
   (2) an adhesive strength between the test piece and the copper wire is 0.7 N/mm or more as measured in the same manner as in the above-mentioned (1), in which the sample obtained in the same manner as in the above-mentioned (1) is placed in a gear oven set to a temperature of 151°C and is treated for 168 hours.

The second invention is a flexible flat cable containing the laminate according to the first invention.

The resin composition used according to the present invention has excellent adhesiveness to bare copper and is capable of retaining adhesiveness to bare copper even when exposed to a hot and humid environment for a long period of time. In addition, the resin composition enables compliance to standards for high rated temperatures or accreditation to the standards to be achieved without involving any cross-linking step. In a preferable aspect of the present invention, even accreditation to UL at a rated temperature of 125°C can be achieved without involving a cross-linking step. Because of this, flexible flat cables having a covering material made of a laminate in which the resin composition used according to the present invention is used as an adhesive layer can be suitably used for wiring in electronic equipment associated with exposure to hot and humid environments, including: electronic equipment installed on the exterior of an automobile, such as millimeter-wave radars and vehicle-mounted cameras; home electric appliances that generate steam, such as rice cookers, electric jar pots, and microwave ovens. In addition, in using bare copper wires as the conductor, the type of metal plating provided for the end portions of flexible flat cables (for example, gold plating, nickel-gold plating) can be selected as desired depending on the usage environment and purpose. Furthermore, the resin composition used according to the present invention has a low dielectric constant and thus can be suitably used for high-speed transmission.

### BRIEF DESCRIPTION OF DRAWINGS

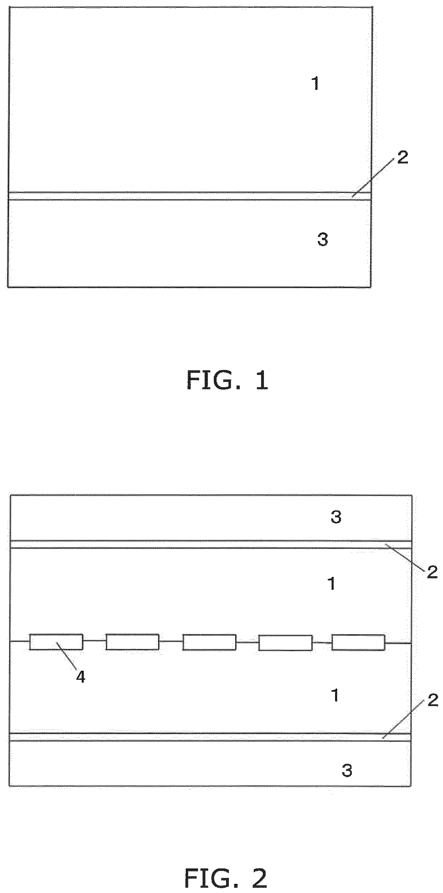

Fig. 1 is a conceptual illustration depicting an example of a laminate in which the resin composition according to the present invention is used.
Fig. 2 is a conceptual illustration depicting the cross-section of an example of a flexible flat cable in which the laminate according to the present invention is used.

As used herein, the term "resin" is used as a term including not only a resin mixture containing two or more resins but also a resin composition containing a component other than a resin. The term "film" is used as a term including a sheet. In the present description, layering a layer and another layer includes both layering the layers directly and layering the layers with another one or more layers mediating therebetween. The term "or more" in reference to a value range is used to mean a value or a greater value. For example, 20% or more means 20%, or more than 20%. The term "or less" in reference to a value range is used to mean a value or a smaller value. For example, 20% or less means 20%, or less than 20%. Furthermore, the term "to" in reference to a value range is used to mean a value, a greater value smaller than another value, or the another value. Here, the "another value" is to be a value greater than the "a value" For example, 10 to 90% means 10%, more than 10% and less than 90%, or 90%.

### 1. Resin Composition:

The resin composition used according to the present invention contains: (A) usually 55 to 85 mass% of an acid modified polypropylene-based resin; and (B) usually 45 to 15 mass% of a copolymer of ethylene and one or more comonomers selected from the group consisting of vinyl acetate, an alkyl methacrylate, and an alkyl acrylate; in which the total of the component (A) and the component (B) is 100 mass%. The resin composition used according to the present invention further contains (C) usually 10 to 300 parts by mass of a flame retardant with respect to the total of the component (A) and the component (B) as 100 parts by mass.

### (A) Acid Modified Polypropylene-based Resin:

The component (A) contains mainly a resin in which an unsaturated carboxylic acid or an unsaturated carboxylic acid derivative is copolymerized, usually graft-copolymerized (hereinafter may be referred to as "acid modified"), with a polypropylene-based resin. The component (A) serves to enable the resin composition to retain adhesiveness to a conductor even when exposed to a hot and humid environment for a long period of time.

The acid modified amount of the component (A) (the amount of a structural unit derived from a copolymerized unsaturated carboxylic acid or unsaturated carboxylic acid derivative) depends on the type of the copolymerized unsaturated carboxylic acid or unsaturated carboxylic acid derivative, and, for example, in the case of a maleic anhydride, the acid modified amount is usually 0.5 mol% or more, preferably 0.7 mol% or more, more preferably 1 mol% or more, from the viewpoint of adhesiveness. It is preferably 10 mol% or less, more preferably 5 mol% or less, from the viewpoint of film-forming properties. Here, in cases where the component (A) is a mixture of two or more acid modified polypropylene-based resins, the acid modified amount is preferable as long as that of the mixture falls within the above-mentioned ranges. The same idea also applies to the below-mentioned MFR-A and melting point. In addition, the mixture may contain a polypropylene-based resin that is not acid modified, as long as the resin is in a small amount (usually less than 50 mass%, preferably less than 20 mass%, more preferably 10 mass% or less).

The acid modified amount of the component (A) can be determined using a ¹³C-NMR spectrum. A ¹³C-NMR spectrum can be measured using, for example, a nuclear magnetic resonance apparatus under the following conditions.
Specimen concentration: 60 mg/0.6 mL of NMR solvent
NMR solvent: a solvent mixture of 1,2,4-trichlorobenzene/benzene - d6 (90 vol%/10 vol%)
Measurement temperature: 130°C
Pulse width: 450° (5.0 µs)
Repetition time: 4 seconds

The component (A) may have a melt mass flow rate (hereinafter may be referred to as MFR-A for short) of usually 5 g/10 minutes or more, preferably 10 g/10 minutes or more, more preferably 50 g/10 minutes or more, further preferably 100 g/10 minutes or more, as measured in accordance with JIS K 7210:1999 under the conditions of 190°C and 21.18 N, from the viewpoint of adhesiveness. The MFR-A may be usually 500 g/10 minutes or less, preferably 300 g/10 minutes or less, more preferably 250 g/10 minutes or less, from the viewpoint of film-forming properties.

The component (A) may have a melting point of preferably 135°C or more, more preferably 150°C or more, further preferably 160°C or more, from the viewpoint of compliance with standards for higher rated temperatures without involving a cross-linking step. The melting point does not have a particular upper limit, and the higher, the more preferable, but that of a usually available acid modified polypropylene-based resin would be about 168°C at the highest.

In the present description, the melting point is a peak top melting point on the highest temperature side on the second melting curve (a melting curve measured in the last temperature raising step) measured using a program according to which the temperature is retained at 230°C for 5 minutes, cooled to -10°C at 10°C/minute, retained at -10°C for 5 minutes, and raised to 230°C at 10°C/minute, using a differential scanning calorimeter, Model Diamond DSC, made by Perkin Elmer Co., Ltd.

The amount of the component (A) to be blended is usually 85 mass% or less, preferably 75 mass% or less, more preferably 70 mass% or less, with respect to the total of the component (A) and the component (B) as 100 mass%, from the viewpoint of adhesiveness to bare copper and the viewpoint of the ability to incorporate the component (C). On the other hand, it is usually 55 mass% or more, preferably 60 mass% or more, from the viewpoint of compliance with standards for higher rated temperatures without involving a cross-linking step.

The component (A) can be produced by a production method including, without particular limitation, melt-kneading the resin composition containing: (p) 100 parts by mass of a polypropylene-based resin; (q) 0.05 to 10 parts by mass of one or more selected from the group consisting of an unsaturated carboxylic acid and an unsaturated carboxylic acid derivative; and (r) 0.05 to 5 parts by mass of an organic peroxide; to graft the component (q) onto the component (p). The above-mentioned melt-kneading is carried out preferably at a temperature equal to or higher than the one-minute half-life temperature of the component (r) for 1 minute or more, more preferably at a temperature equal to or higher than the one-minute half-life temperature of the component (r) for 2 minutes or more, from the viewpoint of allowing the component (q) and the component (r) to react completely and not to remain unreacted in the component (A) produced.

Examples of the polypropylene-based resin include: propylene homopolymers; copolymers (including block copolymers and random copolymers) of propylene and a small amount of another α-olefin (for example, ethylene, 1-butene, 1-hexene, 1-octene, 4-methyl-1-pentene,). The component (p) has a melting point of preferably 135°C, more preferably 150°C or more, further preferably 160°C or more, from the viewpoint of compliance with standards for higher rated temperatures without involving a cross-linking step. The melting point does not have a particular upper limit, and the higher, the more preferable, but that of a usually available polypropylene-based resin would be about 167°C at the highest. The definition and measurement method of the melting point are as above-mentioned. Examples of such polypropylene-based resins include propylene homopolymers having a high tacticity (an isotactic pentad index of usually 96 mol% or more, preferably 98 mol% or more). A mixture of one or more of these can be used as the component (p).

Examples of the unsaturated carboxylic acids include maleic acid, itaconic acid, fumaric acid, acrylic acid, methacrylic acid. Examples of the unsaturated carboxylic acid derivatives include maleic acid monoester, maleic acid diester, maleic anhydride, itaconic acid monoester, itaconic acid diester, itaconic acid anhydride, fumaric acid monoester, fumaric acid diester, fumaric acid anhydride, alkyl acrylates such as methyl acrylate, alkyl methacrylates such as methyl methacrylate. As the component (q), maleic anhydride is preferable from the viewpoint of adhesiveness. A mixture of one or more of these can be used as the component (q).

The amount of the component (q) to be blended may be usually 0.05 parts by mass or more, preferably 0.2 parts by mass or more, more preferably 0.5 parts by mass or more, with respect to 100 parts by mass of (p) the polypropylene-based resin from the viewpoint of adhesiveness. In addition, it may be usually 10 parts by mass or less, preferably 5 parts by mass or less, more preferably 3 parts by mass or less, from the viewpoint of allowing the component (q) not to remain unreacted in the component (A) produced after acid modification.

Examples of the organic peroxides include dicumyl peroxide, di-tert-butyl peroxide, 2,5-dimethyl-2,5-di-(tert-butylperoxy)hexane, 2,5-dimethyl-2,5-di(tert-butylperoxy)hexyne-3,1,3-bis(tert-buty lperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butylperoxy benzoate, tert-butylperoxy isopropyl carbonate, diacetyl peroxide, lauroyl peroxide, tert-butylcumyl peroxide. As the component (r), 2,5-dimethyl-2,5-di-(tert-butylperoxy)hexane and 2,5-dimethyl-2,5-di-(tert-butylperoxy)hexyne-3 are preferable from the viewpoint of adhesiveness. A mixture of one or more of these can be used as the component (r).

The amount of the component (r) to be blended may be usually 0.05 parts by mass or more, preferably 0.2 parts by mass or more, more preferably 0.5 parts by mass or more, with respect to 100 parts by mass of (p) the polypropylene-based resin from the viewpoint of adhesiveness. In addition, it may be usually 5 parts by mass or less, preferably 4 parts by mass or less, more preferably 3 parts by mass or less, from the viewpoint of controlling decrease in melt viscosity during the acid modification.

### (B) Copolymer of Ethylene and One or More Comonomers Selected from the Group Consisting of Vinyl Acetate, Alkyl Methacrylate, and Alkyl Acrylate:

The component (B) is a copolymer of ethylene and one or more comonomers selected from the group consisting of: vinyl acetate; alkyl methacrylates such as methyl methacrylate, ethyl methacrylate, and butyl methacrylate; and alkyl acrylates such as methyl acrylate, ethyl acrylate, and butyl acrylate.

The component (B) serves to incorporate the component (C) as a flame retardant, as well as to enhance adhesive strength to bare copper, enabling the resin composition used according to the present invention to retain adhesiveness to a conductor even when exposed to a hot and humid environment for a long period of time. In addition, the comonomers have a -COO structure and serves to supplement the flame retardance by causing decarboxylation (decarboxylation) when burned.

Among these, copolymers of ethylene and vinyl acetate are preferable from the viewpoint of adhesiveness to bare copper. A mixture of one or more of these can be used as the component (B).

The content of a structural unit derived from the comonomer in the component (B) (hereinafter may be referred to as "comonomer content" for short) may be preferably 10 mass% or more, more preferably 20 mass% or more, further preferably 25 mass% or more, from the viewpoint of adhesiveness to bare copper. It may be preferably 85 mass% or less from the viewpoint of heat resistance. Here, in cases where the component (B) is a mixture of two or more copolymers, the comonomer content is preferable as long as that of the mixture falls within the above-mentioned ranges. The same idea also applies to the below-mentioned MFR-B. In addition, the mixture may contain an ethylene-based polymer that does not contain a comonomer such as vinyl acetate, examples of the polymer including low density polyethylene, straight-chain low density polyethylene, and a copolymer of ethylene and an α-olefin, as long as the polymer is in a small amount (usually less than 50 mass%, preferably 20 mass% or less, more preferably 10 mass% or less, further preferably 5 mass% or less).

The component (B) may have a melt mass flow rate (hereinafter may be referred to as MFR-B for short) of preferably 0.1 g/10 minutes or more, more preferably 1 g/10 minutes or more, further preferably 2 g/10 minutes or more, as measured in accordance with JIS K 7210:1999 under the conditions of 190°C and 21.18 N, from the viewpoint of film-forming properties. It may be further preferably 3 g/10 minutes or more, most preferably 5 g/10 minutes or more, from the viewpoint of obtaining adhesive strength to bare copper at a lower laminate temperature. It may be preferably 30 g/10 minutes or less, more preferably 20 g/10minutes or less, from the viewpoint of controlling decrease in melt viscosity.

The ratio of MFR-A to MFR-B (MFR-A/MFR-B) may be usually 0.2 to 70, preferably 1 to 50, more preferably 5 to 30, from the viewpoint of film-forming properties.

The amount of the component (B) to be blended is usually 15 mass% or more, preferably 20 mass% or more, more preferably 25 mass% or more, with respect to the total of the component (A) and the component (B) as 100 mass%, from the viewpoint of adhesiveness to bare copper and the viewpoint of the ability to incorporate the component (C). It is usually 45 mass% or less, preferably 40 mass% or less, more preferably 35 mass% or less, from the viewpoint of compliance with standards for higher rated temperatures without involving a cross-linking step.

### (C) Flame Retardant:

The resin composition used according to the present invention further contains the component (C).

The component (C) is not limited to a particular flame retardant, and any flame retardant, preferably a polyolefin-based resin or a flame retardant that is usually used for the resin composition, can be used.

Examples of the component (C) include antimony-based flame retardants, halogen-based flame retardants, metal hydroxides, zinc-based flame retardants, phosphorus-based flame retardants, and nitrogen-containing-compound-based flame retardants.

Examples of the antimony-based flame retardant include antimony trioxide, antimony pentoxide, antimony trichloride, antimony borate, antimony molybdate.

Examples of the halogen-based flame retardant include: bromine-based flame retardants such as 1,2-bis(pentabromophenyl)ethane, pentabromodiphenyl ether, octabromodiphenyl ether, decabromodiphenyl ether, tetrabromobisphenol A, hexabromocyclododecane, bis(tetrabromophthalimido)ethane, poly(dibromopropyl ether), tetrabromobisphenol A carbonate oligomer, tetrabromobisphenol epoxy oligomer, tetrabromobisphenol A-bis(dibromopropyl ether), brominated polystyrene, and hexabromobenzene; chlorine-based flame retardants such as chlorinated paraffin, chlorinated polyphenyl, and perchlorpentacyclodecane.

Examples of the metal hydroxide include hydroxide aluminum, hydroxide magnesium.

Examples of the zinc -based flame retardant include zinc stannate, zinc borate.

Examples of the phosphorus-based flame retardant include: organic phosphate ester-based flame retardants such as trimethyl phosphate, triethyl phosphate, tributyl phosphate, triphenyl phosphate, tributoxyethyl phosphate, tricresyl phosphate, trineopentyl phosphate, tri(2-ethylhexyl)phosphate, tri(butylated phenyl)phosphate, tri(isopropylated phenyl)phosphate, triphenyl phosphate, trixylenyl phosphate, and t-butyldiphenyl phosphate; condensed organic phosphate ester-based flame retardants the main component of which is a compound resulting from the condensation of two or more molecules of one or more organic phosphate esters; brominated organic phosphate ester-based flame retardants such as compounds resulting from an organic phosphate ester or a condensed organic phosphate ester one or more hydrogen atoms of which have been substituted with a bromine atom, for example, tris(tribromoneopentyl)phosphate; chlorinated organic phosphate ester-based flame retardants such as compounds resulting from an organic phosphate ester or a condensed organic phosphate ester one or more hydrogen atoms of which have been substituted with a chlorine atom, for example, tris(2,3-dichloropropyl)phosphate; ammonium polyphosphate-based flame retardants; inorganic phosphorus-based flame retardants such as red phosphorus.

Examples of the nitrogen-containing-compound-based flame retardant include: cyanurate-based flame retardants such as melamine cyanurate, tris(2-hydroxyethyl)isocyanurate, and tris(2,3-epoxypropyl)isocyanurate; triazine-based flame retardants; guanidine-based flame retardants.

One or more of these can be used as the component (C).

The amount of the component (C) to be blended may be usually 10 parts by mass or more, preferably 30 parts by mass or more, with respect to the total of the component (A) and the component (B) as 100 parts by mass, from the viewpoint of flame retardance. It may be usually 300 parts by mass or less, preferably 250 parts by mass or less, from the viewpoints of flexibility and bending resistance.

The resin composition used according to the present invention can further contain components other than the components (A) to (C), if desired, to the extent that the containing is not against an object of the present invention, for example: thermoplastic resins other than the components (A) and (B); pigments, inorganic fillers, organic fillers, and resin fillers; additives such as lubricants, antioxidants, weathering stabilizers, heat stabilizers, release agent, antistatic agents, and surfactants.

The resin composition used according to the present invention can be obtained by melt-kneading the components (A), (B), (C), and an optional component to be used if desired, using any melt kneading machine. Examples of the melt kneading machine include: batch kneading machines such as pressure kneaders and mixers; extrusion kneading machines such as uniaxial extruders, co-rotating twin screw extruders, and counter-rotating twin screw extruders; calender roll kneading machines. These may be used in any desired combination. The obtained resin composition can be pelletized by any method. The pelletization can be carried out by a method such as hot cutting, strand cutting, or underwater cutting.

The resin composition used according to the present invention has a melt mass flow rate (hereinafter may be referred to as MFR-Z for short) of 1 g/10 minutes or more, preferably 2 g/10 minutes or more, as measured in accordance with JIS K 7210:1999 under the conditions of 190°C and 21.18 N, from the viewpoint of film-forming properties. In addition, the MFR-Z is 60 g/10 minutes or less, preferably 40 g/10 minutes or less, from the viewpoints of adhesiveness and film-forming properties.

### 2. Laminate:

The laminate according to the present invention contains at least one or more layers (hereinafter also referred to as an adhesive layer) each containing the resin composition used according to the present invention. The laminate preferably has: a biaxially-oriented polyethylene terephthalate-based resin film; an anchor coat containing a coating material containing a silane coupling agent; and a layer containing the resin composition used according to the present invention; in which the anchor coat and the layer are layered in this order on one side of the resin film. Preferably, the laminate has: a biaxially-oriented polyethylene terephthalate-based resin film; an anchor coat containing a coating material containing a modified olefin resin varnish; and a layer containing the resin composition used according to the present invention; in which the anchor coat and the layer are layered in this order on one side of the resin film.

The laminate according to the present invention can be obtained, for example, by forming an adhesive layer using the resin composition used according to the present invention on one side of any resin film directly or with an anchor coat mediating therebetween.

The laminate according to the present invention can be obtained by, for example: a method in which a resin film of any raw material resin and the resin composition used according to the present invention are co-extruded using any co-extruder; a method in which the respective films are obtained using any film-forming machine and then both are layered by dry laminating or thermal laminating; an extrusion laminating method in which the resin composition used according to the present invention is melt-extruded onto any resin film used as a base material.

Examples of the resin film include: resins, for example: polyvinyl chloride-based resins such as polyvinyl chloride and vinyl chloride/vinyl acetate copolymers; polyester-based resins such as aromatic polyesters and aliphatic polyesters; polyolefin-based resins such as polyethylene, polypropylene, and polymethyl pentene; styrene-based resins such as polystyrene, acrylonitrile/butadiene/styrene copolymer resins (ABS resins), styrene/ethylene/butadiene/styrene copolymers, styrene/ethylene/propylene/styrene copolymers, and styrene/ethylene/ethylene/propylene/styrene copolymers; acryl-based resins such as polymethyl (meth)acrylate; polycarbonate-based resins; cellulose-based resins such as cellophane, triacetyl cellulose, diacetyl cellulose, and acetyl cellulose butyrate; polyvinylidene chloride-based resins; fluorine-containing resins such as polyvinylidene fluoride; and others such as polyvinyl alcohol, ethylene vinyl alcohol, polyether ether ketone, nylon, polyamide, polyimide, polyurethane, polyether imide, polysulphone, and polyether sulphone; include resin mixtures of one or more of these; and include films of these resin compositions. These films encompass non-oriented films, unixially-oriented films, and biaxially-oriented films. These films further encompass layered films formed in two or more layers of one or more of these films.

Among these resin films, those which have high heat resistance are preferable, for example, biaxially-oriented polyethylene terephthalate-based resin films, biaxially-oriented polyethylene naphthalate-based resin films, biaxially-oriented polypropylene-based resin films, polyphenylene sulfide-based resin films, polyimide-based resin films, amide-based resin films, and polyether sulphone-based resin films.

As coating materials for forming the anchor coat, those which are known can be used, for example, polyester, acryl, polyurethane, acrylic urethane, polyester urethane. Coating materials containing a silane coupling agent can also be used. Coating materials containing a modified olefin resin varnish can also be used.

The coating material containing a silane coupling agent is a coating material containing mainly a silane coupling agent (in the form of a solid content of usually 50 mass% or more, preferably 75 mass% or more, more preferably 90 mass% or more).

The silane coupling agent is a silane compound having at least two different reactive groups of: hydrolysable groups (for example, alkoxy groups such as a methoxy group and an ethoxy group; acyloxy groups such as an acetoxy group; halogen groups such as a chloro group;). and organic functional groups (for example, an amino group, a vinyl group, an epoxy group, a methacryloxy group, an acryloxy group, an isocyanate). Among these, silane coupling agents having an amino group and silane coupling agents having an epoxy group are preferable from the viewpoint of enhancing the adhesive strength with a layer containing the resin composition according to the present invention.

Examples of silane coupling agents having an amino group include N-2-(aminoethyl)-3-aminopropylmethyldimethoxy silane, N-2-(aminoethyl)-3-aminopropyltrimethoxy silane, N-2-(aminoethyl)-3-aminopropyltriethoxy silane, 3-aminopropyltrimethoxy silane, 3-aminopropyltriethoxy silane, 3-triethoxysilyl-N-(1,3-dimethyl-butylidene)propyl amine, N-phenyl-3-aminopropyltrimethoxy silane, N-(vinylbenzyl)-2-aminoethyl-3-aminopropyltrimethoxy silane. A mixture of one or more of these can be used as a silane coupling agent having an amino group.

Examples of silane coupling agents having an epoxy group include 2-(3,4-epoxycyclohexyl)ethyltrimethoxy silane, 3-glycidoxypropylmethyldimethoxy silane, 3-glycidoxypropyltrimethoxy silane, 3-glycidoxypropylmethyldiethoxy silane, 3-glycidoxypropyltriethoxy silane. A mixture of one or more of these can be used as a silane coupling agent having an epoxy group.

The coating material containing a modified olefin resin varnish is a coating material containing mainly a modified olefin resin varnish (in the form of a solid content of usually 50 mass% or more, preferably 75 mass% or more, more preferably 90 mass% or more).

The modified olefin resin varnish is a varnish obtained by modifying an olefin resin with a compound having a hydrophilic functional group (typically an unsaturated carboxylic acid, an unsaturated carboxylic acid derivative). The modified olefin resin varnish has a small molecular weight and is distinctively distinguished from the component (A) in that the modified olefin resin varnish can be easily dissolved in a solvent to make a coating material.

Methods that can be used to form an anchor coat using the above-mentioned coating material for forming an anchor coat include, without limitation, a known web coating method. Specific examples include methods such as roll coating, gravure coating, reverse coating, roll brush coating, spray coating, air knife coating, and die coating. For this, any diluting solvent can be used if necessary, for example, methanol, ethanol, 1-methoxy-2-propanol, n butyl acetate, toluene, methylethyl ketone, methylisobutyl ketone, ethyl acetate, acetone.

The coating material for forming an anchor coat may contain one or more of additives such as an antioxidant, a weathering stabilizer, a light resistance stabilizer, an ultraviolet absorber, a heat stabilizer, an antistatic agent, a surfactant, a coloring agent, an infrared ray shielding agent, a leveling agent, a thixotropic agent, and a filler, to the extent that the containing is not against an object of the present invention.

The dry thickness of the anchor coat is usually about 0.01 to 5 µm, preferably 0.03 to 1 µm.

### 3. Flexible Flat Cable:

The flexible flat cable according to the present invention contains the laminate according to the present invention.

The flexible flat cable according to the present invention can be obtained, for example, as follows: two rolls of the laminate according to the present invention are used, in which the laminate has: a biaxially-oriented polyethylene terephthalate-based resin film; an anchor coat layer containing a coating material containing a silane coupling agent; and a layer containing the resin composition according to the present invention (adhesive layer); in which the two layers are layered in this order on one side of the resin film; about 1 to 30 conductor lines such as bare copper wires (annealed copper wires), tin plated annealed copper wires, and nickel plated annealed copper wires, which are each about 0.6 to 1.7 mm in width and about 0.035 to 2 mm in thickness, are arrayed and sandwiched between the adhesive layer of the one laminate and the adhesive layer of the other laminate; and the resulting product is pressed by a pressing roll preheated to a temperature of 130 to 200°C and a backing roll preheated to a temperature of 130 to 200°C.

### EXAMPLES

The present invention will be described below with reference to Examples, but is not to be limited thereto.

### Measurement Method

(1) Film-forming properties:
   A film-forming machine equipped with a T-die 700 mm in width, an extruder, and a pulling winding device of a nip type was used to form a film 50 µm in thickness under the condition of a 210°C resin temperature at the outlet of the die. The obtained film was measured for thickness at a total of 25 points: a point in the center, another 50 mm from center to right, a third 100 mm from center to right, a fourth 50 mm from center to left, and a fifth 100 mm from center to left, each in the width direction of the film, five sets of which five points are spaced at 50 m intervals in the machine running direction; and the thicknesses were rated on the following criteria.
   : thickness variation ±5% or less
   ∘: thickness variation more than ±5% but ±10% or less
   Δ: thickness variation more than ±10%
   ×: stable film-forming not possible
(2) Adhesive force 1 (conductor adhesive force):
   A test piece, 50 mm in width and 150 mm in length, was cut out of the laminate such that the machine running direction of the laminate was the longitudinal direction of the test piece; a bare copper wire (annealed copper wire ), 0.7 mm in conductor width and 0.035 mm in thickness, was placed on the adhesive layer of the test piece such that the longitudinal direction of the copper wire agreed with the longitudinal direction of the test piece; a pressing machine was used to sandwich the test piece with the copper wire placed thereon between a metal plate and a silicone rubber sheet each preheated to a temperature of 190°C, such that the copper wire side faced the silicone rubber sheet side; the resulting piece was pressed under the conditions of a 0.3 MPa pressure and a 8-second time. An adhesive strength between the test piece and the copper wire in the sample obtained as above-mentioned was measured in a 180-degree peeling test under the condition of a 100 mm/minute test rate. The adhesive force 1 (conductor adhesive force) may be preferably 0.3 N/mm or more, more preferably 0.5 N/mm or more.
(3) Adhesive force 2 (conductor adhesive force after heat and humidity treatment):
   The sample obtained in the same manner as in the above-mentioned test (2) was treated for 1000 hours in a thermohygrostat set to a temperature of 85°C and a relative humidity of 85%, and then an adhesive strength between the test piece and the copper wire was measured in the same manner as in the above-mentioned test (2). The adhesive force 2 (conductor adhesive force after heat and humidity treatment) is 0.7 N/mm or more, preferably 1 N/mm or more.
(4) Adhesive force 3 (conductor adhesive force after heat resistance treatment):
   The sample obtained in the same manner as in the above-mentioned test (2) was placed in a gear oven set to a temperature of 151°C and was treated for 168 hours, whereafter an adhesive strength between the test piece and the copper wire was measured in the same manner as in the above-mentioned test (2). The adhesive force 3 (conductor adhesive force after heat resistance treatment) is 0.7 N/mm or more, preferably 1 N/mm or more.
(5) Adhesive Force 4 (adhesive force between adhesive agents)
   Test pieces, 50 mm in width and 150 mm in length, were cut out of the laminate such that the machine running direction of the laminate was the longitudinal direction of the test piece; and the pieces layered with the respective adhesive layers thereof facing each other were pressed, under the conditions of a 0.3 MPa pressure and a 2-second time, between a metal plate and a silicone rubber sheet each preheated to a temperature of 190°C. An adhesive strength of the sample obtained as above-mentioned was measured in a T-shape peeling test under the condition of a 100 mm/minute test rate. In this regard, the "material broken" in the Tables means that the biaxially-oriented polyethylene terephthalate-based resin film of the laminate was broken. In addition, the "PET" means that the biaxially-oriented polyethylene terephthalate-based resin film layer and the adhesive layer were peeled off at the interface.
(6) Adhesive force 5 (adhesive force between adhesive agents after heat and humidity treatment):
   The sample obtained in the same manner as in the above-mentioned test (5) was treated for 1000 hours in a thermohygrostat set to a temperature of 85°C and a relative humidity of 85%, and then an adhesive strength was measured in the same manner as in the above-mentioned test (5).
(7) Adhesive force 6 (adhesive force between adhesive agents after heat resistance treatment):
   The sample obtained in the same manner as in the above-mentioned test (5) was placed in a gear oven set to a temperature of 151°C and was treated for 168 hours, whereafter an adhesive strength was measured in the same manner as in the above-mentioned test (5).
(8) Flame retardance:
   Using a flexible flat cable device, two rolls of the laminate were set to sandwich an array of eight bare copper wires (annealed copper wires), which were each 0.7 mm in conductor width and 0.035 mm in thickness, between the adhesive layer of the one laminate and the adhesive layer of the other laminate; and the resulting piece was pressed by a pressing roll preheated to a temperature of 190°C and a backing roll preheated to a temperature of 190°C to obtain a flexible flat cable 25 mm in width. The obtained flexible flat cable was evaluated in accordance with the 1080 VW-1 combustion test of UL1581.
(9) Heat resistance:
   A piece for testing, 15 cm in length, was taken out of the flexible flat cable obtained in the same manner as in the test (8), and folded zigzag (in a Z-shape) with sides each 5 cm in the direction perpendicular to the longitudinal direction of the bare copper wire (annealed copper wire), having the creases held with clips, to make a test piece. The test piece obtained as above-mentioned was placed in a gear oven set to a temperature of 151°C and was treated for 168 hours, whereafter the test piece was visually observed and rated on the following criteria.
   ∘: no peeling at interface observed In addition, no cohesive failure observed on adhesive agent.
   Δ: no peeling at interface observed, but some cohesive failure observed on part of adhesive agent
   x: peeling at interface observed at any one of interfaces
(10) Resistance to heat and humidity:
   A test piece obtained in the same manner as in the above-mentioned test (9) was placed in a thermohygrostat set to a temperature of 85°C and a relative humidity of 85% and then was treated for 1000 hours, whereafter the test piece was visually observed and rated on the following criteria.
   ∘: no peeling at interface observed In addition, no cohesive failure observed on adhesive agent.
   Δ: no peeling at interface observed, but some cohesive failure observed on part of adhesive agent
   ×: peeling at interface observed at any one of interfaces
(11) Heat cycle resistance:
   A test piece obtained in the same manner as in the above-mentioned test (9) was placed in a thermostatic oven and treated through 500 cycles, in each of which the test piece was treated at a temperature of -40°C for 30 minutes, heated to a temperature of 125°C, treated at the same temperature for 30 minutes, and cooled to a temperature of -40°C, and then the test piece was visually observed and rated on the following criteria.
   ∘: no peeling at interface observed.
      In addition, no cohesive failure observed on adhesive agent.
   Δ: no peeling at interface observed, but some cohesive failure observed on part of adhesive agent
   ×: peeling at interface observed at any one of interfaces
(12) Cold resistance
   A flexible flat cable obtained in the same manner as in the above-mentioned test (8) was allowed to stand for 24 hours in a constant temperature test chamber set to -40°C, and folded in two in the chamber such that the crease was oriented in the machine running direction of the cable, whereafter the test piece was visually observed. Similarly, the test piece was folded in two such that the crease was oriented in the width direction of the cable, and the test piece was visually observed. The test piece was rated on the following criteria.
   ∘: no peeling at interface observed in any case
      In addition, no cohesive failure observed on adhesive agent.
   Δ: no peeling at interface observed in any case, but some cohesive failure observed on part of adhesive agent in at least any one of the cases
   ×: peeling at interface observed at any one of interfaces in at least any one of the cases

### Raw Materials Used

### (A) Acid modified polypropylene-based resin:

(A-1) Mixture of 45 parts by mass of the following (a1) and 20 parts by mass of the following (a3). The mixture itself had an acid modified amount of 1.24 mol%, an MFR-A of 118 g/10 minutes, and a melting point of 154°C.
(A-2) Mixture of 30 parts by mass of the following (a1) and 35 parts by mass of the following (a4). The mixture itself had an acid modified amount of 0.78 mol%, an MFR-A of 40 g/10 minutes, and a melting point of 137°C.
(A-3) Mixture of 55 parts by mass of the following (a2) and 10 parts by mass of the following (a4). The mixture itself had an acid modified amount of 2.88 mol%, an MFR-A of 190 g/10 minutes, and a melting point of 145°C.
(A-4) Mixture of 60 parts by mass of the following (a1) and 5 parts by mass of the following (a4). The mixture itself had an acid modified amount of 1.57 mol%, an MFR-A of 240 g/10 minutes, and a melting point of 150°C.
(A-5) Mixture of 20 parts by mass of the following (a2) and 45 parts by mass of the following (a4). The mixture itself had an acid modified amount of 1.05 mol%, an MFR-A of 31 g/10 minutes, and a melting point of 147°C.

(A') Polypropylene-based resin:
(A'-1) Polypropylene-based resin, "PRIME POLYPRO F227D (tradename)" available from Prime Polymer Co., Ltd., having an acid modified amount of 0.0 mol%, an MFR-A of 3 g/10 minutes, and a melting point of 142°C
(a1) Maleic anhydride modified polypropylene-based resin, "UMEX 1001 (tradename)" available from Sanyo Chemical Industries, Ltd., having an acid modified amount of 1.7 mol%, an MFR-A of 300 g/10 minutes, and a melting point of 154°C
(a2) Maleic anhydride modified polypropylene-based resin, "UMEX 1010 (tradename)" available from Sanyo Chemical Industries, Ltd., having an acid modified amount of 3.4 mol%, an MFR-A of 600 g/10 minutes, and a melting point of 145°C
(a3) Maleic anhydride modified polypropylene-based resin, "ADMER QE800 (tradename)" available from Mitsui Chemicals, Inc., having an acid modified amount of 0.2 mol%, an MFR-A of 7 g/10 minutes, and a melting point of 142°C
(a4) Polypropylene-based resin, "PRIME POLYPRO F227D (tradename)" available from Prime Polymer Co., Ltd., having an acid modified amount of 0.0 mol%, an MFR-A of 3 g/10 minutes, and a melting point of 142°C

### (B) Ethylene vinyl acetate copolymers:

(B-1) Ethylene vinyl acetate copolymer, "EVAFLEX V523 (tradename)" available from Du Pont-Mitsui Polychemicals Co., Ltd., having an MFR-B of 14 g/10 minutes and a comonomer content of 33 mass%
(B-2) Ethylene vinyl acetate copolymer, "EVAFLEX EV40L (tradename)" available from Du Pont-Mitsui Polychemicals Co., Ltd., having an MFR-B of 2 g/10 minutes and a comonomer content of 41 mass%
(B-3) Ethylene vinyl acetate copolymer, "EVAFLEX V9000 (tradename)" available from Du Pont-Mitsui Polychemicals Co., Ltd., having an MFR-B of 0.8 g/10 minutes and a comonomer content of 41 mass%
(B-4) Ethylene vinyl acetate copolymer, "EVAFLEX EV260 (tradename)" available from Du Pont-Mitsui Polychemicals Co., Ltd., having an MFR-B of 6 g/10 minutes and a comonomer content of 28 mass%
(B-5) Ethylene vinyl acetate copolymer, "EVAFLEX EV150 (tradename)" available from Du Pont-Mitsui Polychemicals Co., Ltd., having an MFR-B of 30 g/10 minutes and a comonomer content of 33 mass%

### (C) Flame retardant:

(C-1) Bromine-based flame retardant, "SAYTEX 8010 (tradename)" available from Albemarle Corporation
(C-2) Antimony trioxide, "PATOX-M (tradename)" available from Nihon Seiko Co., Ltd.

### Anchor Coat:

(AC-1) Anchor coat made by diluting 3-aminopropyltriethoxy silane, "KBE-903 (tradename)" available from Shin-Etsu Chemical Co., Ltd., with a modified alcohol solvent, "solvent mixture of ethanol/isopropyl alcohol/methanol = 80/20/1 (volume ratio)", so as to have a solid concentration of 1 mass%.
(AC-2) Anchor coat made by diluting a modified olefin resin varnish, "XP012 (tradename)" available from Mitsui Chemicals, Inc., with methylethyl ketone, so as to have a solid concentration of 20 mass%.
(AC-3) Anchor coat made by diluting 3-glycidoxypropyltriethoxy silane, "KBE-403 (tradename)" available from Shin-Etsu Chemical Co., Ltd., with a modified alcohol solvent, "solvent mixture of ethanol/isopropyl alcohol/methanol = 80/20/1 (volume ratio)", so as to have a solid concentration of 1 mass%.
(AC-4) Anchor coat made by diluting 3-methacryloxypropyltriethoxy silane, "KBE-503 (tradename)" available from Shin-Etsu Chemical Co., Ltd., with a modified alcohol solvent, "solvent mixture of ethanol/isopropyl alcohol/methanol = 80/20/1 (volume ratio)", so as to have a solid concentration of 1 mass%.

### Example 1

A resin composition containing 65 parts by mass of (A-1), 35 parts by mass of (B-1), 60 parts by mass of (C-1), and 20 parts by mass of (C-2) was obtained by melt-kneading using a co-rotating twin screw extruder under the condition of a resin temperature of 210°C at the outlet of the die. A film-forming machine equipped with a T-die 700 mm in width, an extruder, and a pulling winding device of a nip type was used to form a resin film 50 µm in thickness out of the obtained resin composition under the condition of a 210°C resin temperature at the outlet of the die. Then, using a coating machine of a film Meyer bar type, the above-mentioned (AC-1) was applied to one side of a biaxially-oriented polyethylene terephthalate-based resin film 25 µm in thickness so as to have a dry film thickness of 0.01 µm, and formed an anchor coat. Subsequently, the above-mentioned resin film was layered onto the anchor coat formed on the biaxially-oriented polyethylene terephthalate-based resin film, and thermally laminated by a pressing roll preheated to a temperature of 190°C and a backing roll preheated to a temperature of 190°C under the conditions of a 0.3 MPa pressure and a 1.0 m/min rate to obtain a laminate. The above-mentioned tests (1) to (10) was carried out. The results are shown in Table 1.

### Examples 2 to 13

The laminates were obtained entirely in the same manner as in Example 1 except that the formulations of the resin compositions were changed as shown in any one of Tables 1 to 3. The above-mentioned tests (1) to (12) was carried out. The results are shown in any one of Tables 1 to 3.

### Example 14

The laminate was obtained entirely in the same manner as in Example 1 except that the (AC-2) was used as an anchor coat and that the dry film thickness was changed to 2.0 µm. The above-mentioned tests (1) to (12) was carried out. The results are shown in Table 3.

### Example 15

The laminate was obtained entirely in the same manner as in Example 1 except that the (AC-3) was used as an anchor coat. The above-mentioned tests (1) to (12) was carried out. The results are shown in Table 3.

### Example 16

The laminate was obtained entirely in the same manner as in Example 1 except that the (AC-4) was used as an anchor coat. The above-mentioned tests (1) to (12) was carried out. The results are shown in Table 3.

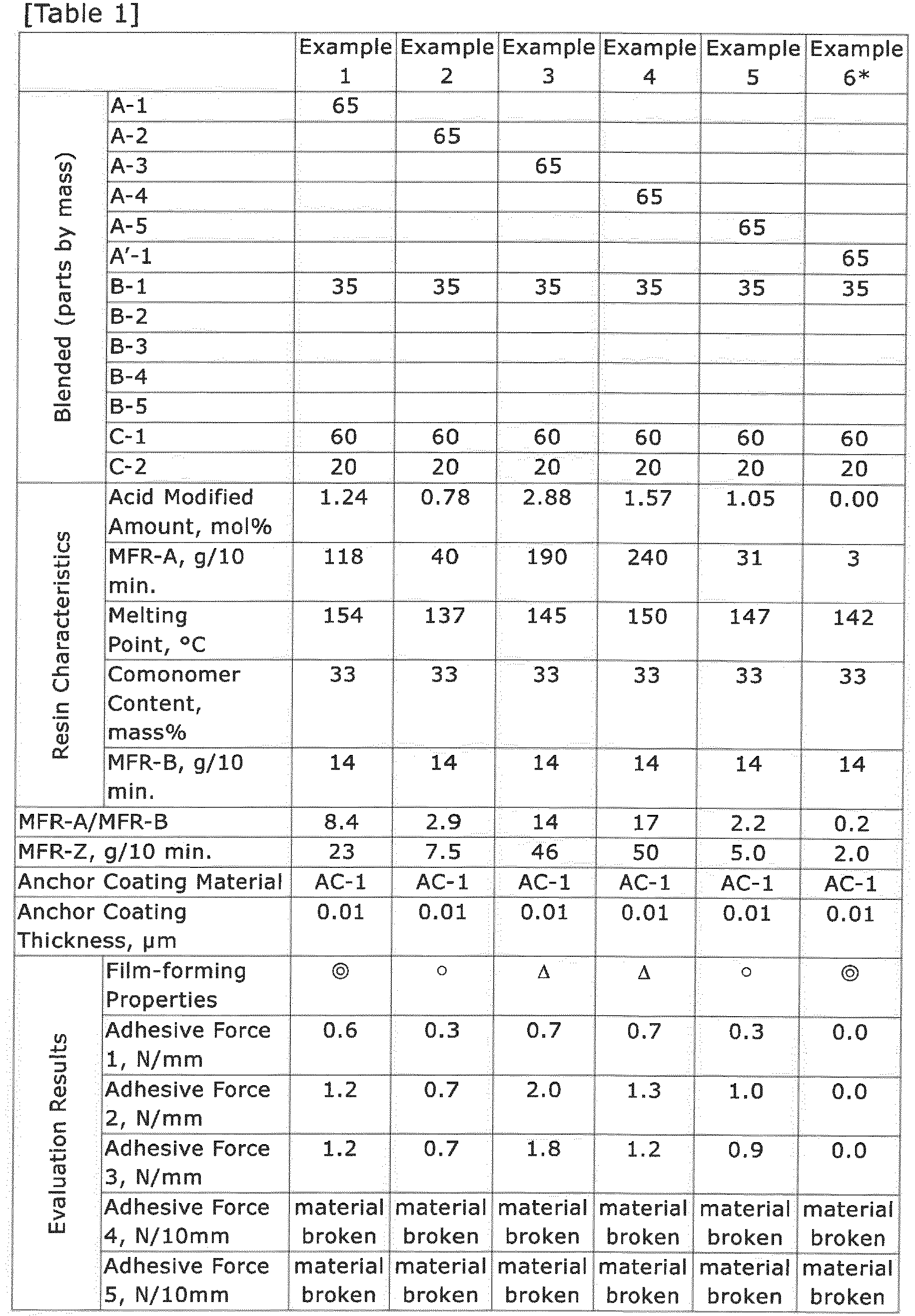

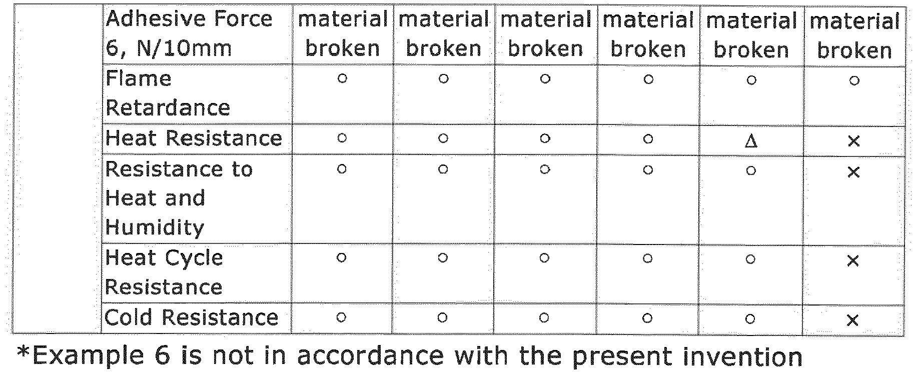

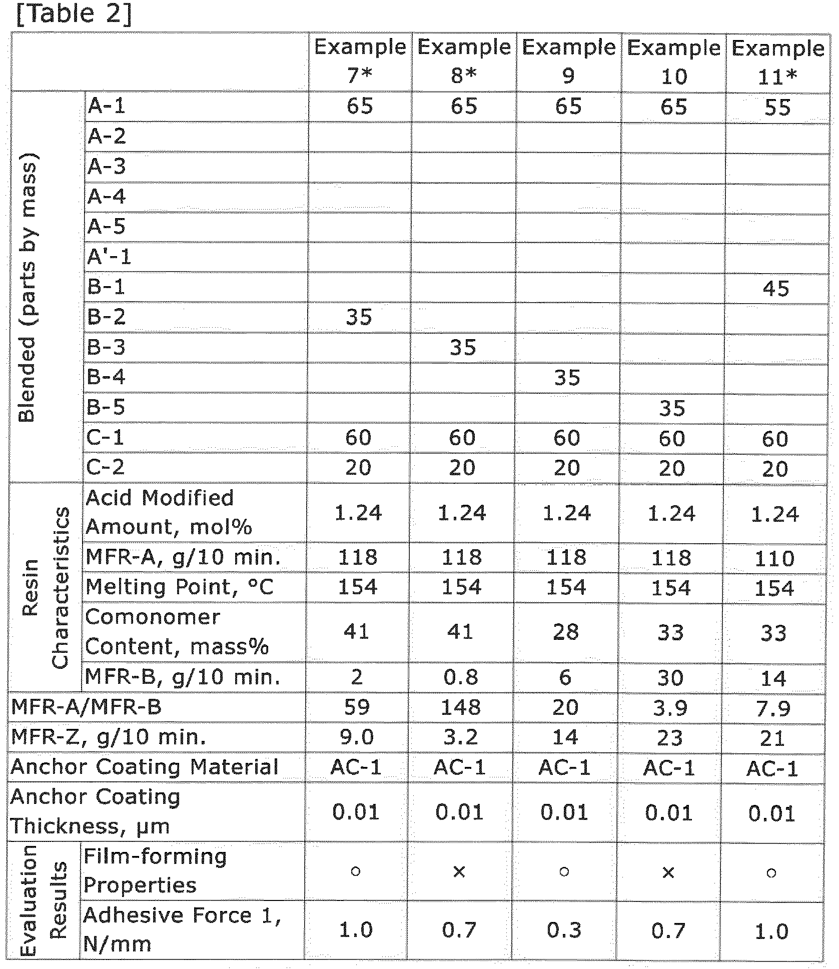

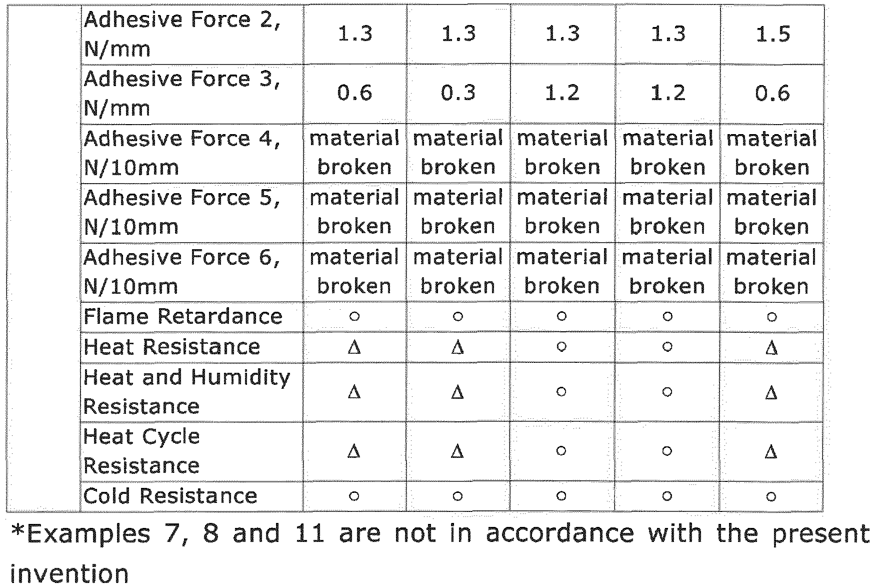

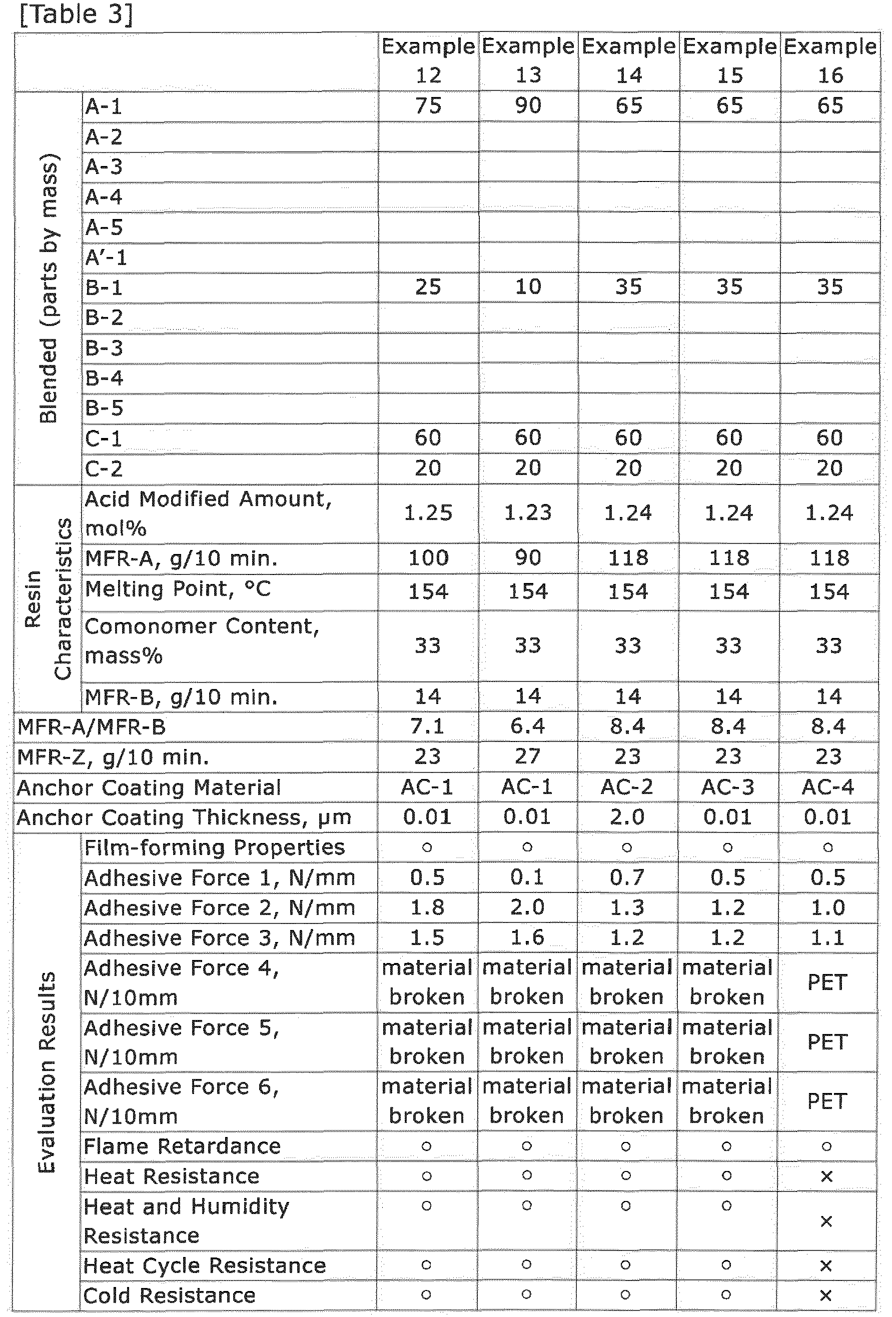

The resin composition used according to the present invention has favorable film-forming properties and excellent adhesive strength to bare copper wires and is capable of retaining adhesiveness to a conductor even when exposed to a hot and humid environment for a long period of time. In addition, the resin composition can be expected to enable accreditation to UL at a rated temperature of 125°C to be achieved without involving any cross-linking step.

### Reference Signs List

1: Layer (adhesive layer) containing a resin composition for an adhesive layer
2: Anchor coat
3: Biaxially-oriented polyethylene terephthalate-based resin film layer
4: Tin plated annealed copper wire

## Claims

1. A laminate having a resin film base material and an adhesive layer placed on one side of the resin film base material,
wherein the adhesive layer comprises:
(A) an acid modified polypropylene-based resin;
(B) a copolymer of ethylene and one or more comonomers selected from the group consisting of vinyl acetate, an alkyl methacrylate, and an alkyl acrylate; and
(C) a flame retardant;
wherein the adhesive layer contains a resin composition having a melt mass flow rate of 1 to 60 g/10 minutes as measured in accordance with JIS K 7210:1999 under the conditions of 190°C and 21.18 N;
wherein the laminate satisfies the following conditions (1) and (2):
(1) an adhesive strength between a test piece and a copper wire in a sample is 0.7 N/mm or more as measured in a 180-degree peeling test under a condition of a 100 mm/minute test rate, wherein the test piece, 50 mm in width and 150 mm in length, is cut out of the laminate such that the machine running direction of the laminate is the longitudinal direction of the test piece; a bare copper wire (annealed copper wire ), 0.7 mm in conductor width and 0.035 mm in thickness, is placed on the adhesive layer of the test piece such that the longitudinal direction of the copper wire agrees with the longitudinal direction of the test piece; a pressing machine is used to sandwich the test piece with the copper wire placed thereon between a metal plate and a silicone rubber sheet each preheated to a temperature of 190°C, such that the copper wire side faces the silicone rubber sheet side; the resulting piece is pressed under the conditions of a 0.3 MPa pressure and a 8-second time to produce the sample; and the sample is treated for 1000 hours in a thermohygrostat set to a temperature of 85°C and a relative humidity of 85%;
(2) an adhesive strength between the test piece and the copper wire is 0.7 N/mm or more as measured in the same manner as in the above-mentioned (1), wherein the sample obtained in the same manner as in the above-mentioned (1) is placed in a gear oven set to a temperature of 151°C and is treated for 168 hours.

2. The laminate according to claim 1, wherein the resin film base material is a biaxially-oriented polyethylene terephthalate-based resin film; and wherein the laminate further comprises an anchor coat containing a coating material containing a silane coupling agent, wherein the anchor coat and the adhesive layer are layered in this order on one side of the resin film.

3. The laminate according to claim 2, wherein the silane coupling agent is one or more selected from the group consisting of a silane coupling agent having an amino group and a silane coupling agent having an epoxy group.

4. The laminate according to claim 1, wherein the resin film base material is a biaxially-oriented polyethylene terephthalate-based resin film; and wherein the laminate further comprises an anchor coat containing a coating material containing a modified olefin resin varnish, wherein the anchor coat and the adhesive layer are layered in this order on one side of the resin film.

5. A flexible flat cable comprising the laminate according to any one of claims 1 to 4.

## Patentansprüche

1. Laminat mit einem Harzfilmbasismaterial und einer Haftmittelschicht, die auf einer Seite des Harzfilmbasismaterials angeordnet ist,
wobei die Haftmittelschicht umfasst:
(A) ein säuremodifiziertes Harz auf Polypropylenbasis;
(B) ein Copolymer aus Ethylen und einem oder mehreren Comonomeren, ausgewählt aus der Gruppe, bestehend aus Vinylacetat, einem Alkylmethacrylat und einem Alkylacrylat; und
(C) ein flammhemmendes Mittel;
wobei die Haftmittelschicht eine Harzzusammensetzung mit einem Schmelzmassendurchsatz von 1 bis 60 g/10 Minuten, gemessen gemäß JIS K 7210:1999 unter den Bedingungen von 190°C und 21,18 N, enthält;
wobei das Laminat die folgenden Bedingungen (1) und (2) erfüllt:
(1) eine Haftfestigkeit zwischen einem Teststück und einem Kupferdraht in einer Probe beträgt 0,7 N/mm oder mehr, gemessen in einem 180-Grad-Schältest unter der Bedingung einer Testrate von 100 mm/Minute, wobei das Teststück mit einer Breite von 50 mm und einer Länge von 150 mm aus dem Laminat ausgeschnitten wird, so dass die Maschinenlaufrichtung des Laminats die Längsrichtung des Teststücks ist; ein blanker Kupferdraht (geglühter Kupferdraht) mit einer Leiterbreite von 0,7 mm und einer Dicke von 0.035 mm auf die Haftmittelschicht des Teststücks gelegt wird, so dass die Längsrichtung des Kupferdrahtes mit der Längsrichtung des Teststücks übereinstimmt; eine Pressmaschine verwendet wird, um das Teststück mit dem darauf befindlichen Kupferdraht zwischen einer Metallplatte und einer Silikonkautschukplatte einzuklemmen, die jeweils auf eine Temperatur von 190°C vorgewärmt sind, so dass die Seite des Kupferdrahtes der Seite der Silikonkautschukplatte zugewandt ist; das resultierende Stück unter den Bedingungen eines Drucks von 0.3 MPa und einer Zeit von 8 Sekunden gepresst wird, um die Probe herzustellen; und die Probe 1000 Stunden lang in einem Thermohygrostat, der auf eine Temperatur von 85°C und eine relative Feuchtigkeit von 85% eingestellt ist, behandelt wird;
(2) eine Haftfestigkeit zwischen dem Teststück und dem Kupferdraht beträgt 0,7 N/mm oder mehr, gemessen auf die gleiche Weise wie in der oben erwähnten (1), wobei die auf die gleiche Weise wie in der oben erwähnten (1) erhaltene Probe in einen auf eine Temperatur von 151°C eingestellten Getriebeofen gelegt und 168 Stunden lang behandelt wird.

2. Laminat nach Anspruch 1, wobei das Harzfilmbasismaterial ein biaxial orientierter Harzfilm auf Polyethylenterephthalat-Basis ist; und wobei das Laminat ferner eine Ankerbeschichtungsschicht umfasst, enthaltend ein Beschichtungsmaterial, enthaltend ein Silan-Kupplungsmittel, wobei die Ankerbeschichtungsschicht und die Haftmittelschicht in dieser Reihenfolge auf einer Seite des Harzfilms geschichtet sind.

3. Laminat nach Anspruch 2, wobei das Silan-Kupplungsmittel eines oder mehrere, ausgewählt aus der Gruppe, bestehend aus einem Silan-Kupplungsmittel mit einer Aminogruppe und einem Silan-Kupplungsmittel mit einer Epoxygruppe, ist.

4. Laminat nach Anspruch 1, wobei das Harzfilmbasismaterial ein biaxial orientierter Harzfilm auf Polyethylenterephthalat-Basis ist; und wobei das Laminat ferner eine Ankerbeschichtungsschicht umfasst, enthaltend ein Beschichtungsmaterial, enthaltend einen modifizierten Olefinharzlack, wobei die Ankerbeschichtungsschicht und die Haftmittelschicht in dieser Reihenfolge auf einer Seite des Harzfilms geschichtet sind.

5. Flexibles Flachkabel, umfassend das Laminat nach einem der Ansprüche 1 bis 4.

## Revendications

1. Laminé présentant une matière de base en film de résine et une couche adhésive placée sur un côté de la matière de base en film de résine,
dans lequel la couche adhésive comprend :
(A) une résine à base de polypropylène modifiée par un acide ;
(B) un copolymère d'éthylène et un ou plusieurs comonomères sélectionnés parmi le groupe consistant en acétate de vinyle, un alkylméthacrylate et un alkylacrylate ; et
(C) un retardateur de flamme ;
dans lequel la couche adhésive contient une composition de résine présentant un débit massique en fusion de 1 à 60 g/10 minutes, comme mesuré selon la norme JIS K 7210:1999 dans des conditions de 190°C et 21,18 N ;
dans lequel le laminé satisfait aux conditions suivantes (1) et (2) :
(1) le pouvoir adhésif entre une éprouvette et un fil de cuivre dans un échantillon est de 0,7 N/mm ou plus, comme mesuré dans un test de pelage à 180 degrés à la condition d'une rapidité de test de 100 mm/minute, dans lequel l'éprouvette, 50 mm de largeur et 150 mm de longueur, est découpé du laminé de sorte que le sens de marche machine du laminé est la direction longitudinale de l'éprouvette ; on place un fil de cuivre nu (fil de cuivre recuit), 0,7 mm de largeur de conducteur et 0,035 mm d'épaisseur, sur la couche adhésive de l'éprouvette de sorte que le sens longitudinal du fil de cuivre suive bien la direction longitudinale de l'éprouvette ; on utilise une machine à comprimer pour mettre en sandwich l'éprouvette avec le fil de cuivre placé dessus entre une plaque de métal et une feuille de caoutchouc de silicone, chacune préchauffées jusqu'à une température de 190°C, de sorte que le côté de fil de cuivre soit face au côté de la feuille de caoutchouc de silicone ; on comprime la pièce obtenue dans les conditions d'une pression de 0,3 MPa et d'une durée de 8 secondes pour produire l'échantillon ; et on traite l'échantillon pendant 1000 heures dans un thermohygrostat réglé sur une température de 85°C et une humidité relative de 85% ;
(2) le pouvoir adhésif entre l'éprouvette et le fil de cuivre est de 0,7 N/mm ou plus, comme mesuré de la même manière qu'au susmentionné (1), dans lequel l'échantillon obtenu de la même manière que dans le susmentionné (1) est placé dans un four à engrenages réglée sur une température de 151°C et on le traite pendant 168 heures.

2. Laminé selon la revendication 1, dans lequel la matière de base en film de résine est un film de résine à base de polyéthylène téréphtalate à orientation biaxiale ; et dans lequel le laminé comprend en outre une couche d'ancrage contenant une matière de revêtement contenant un agent de couplage silane, dans lequel la couche d'ancrage et la couche adhésive sont mises en couches dans cet ordre sur un côté du film de résine.

3. Laminé selon la revendication 2, dans lequel l'agent de couplage silane est un ou plusieurs sélectionnés parmi le groupe consistant en agent de couplage silane présentant un groupement amino et un agent de couplage silane présentant un groupement époxy.

4. Laminé selon la revendication 1, dans lequel la matière de base en film de résine est un film de résine à base de polyéthylène téréphtalate à orientation biaxiale ; et dans lequel le laminé comprend en outre une couche d'ancrage contenant une matière de revêtement contenant un vernis de résine d'oléfine modifiée, dans lequel la couche d'ancrage et la couche adhésive sont mises en couches dans cet ordre sur un côté du film de résine.

5. Câble plat flexible comprenant le laminé selon l'une quelconque des revendications 1 à 4.
